# EUROPEAN PATENT APPLICATION

(11) **EP 1 209 596 A1**
(43) Date of publication of application: **29.05.2002**
(21) Application number: 01126506.3
(22) Date of filing: 10.11.2001
(51) Int. Cl.: G06F 17/60

(54) **Knowledge creation support and knowledge asset management system**

(30) Priority: 21.11.2000 JP 2000354111
(71) Applicant: Konno, Noboru, Tokyo (JP)
(72) Inventor: Konno, Noboru, Suginami-ku, Tokyo (JP); Nonaka, Ikujiro, Hachioji-shi, Tokyo (JP)
(74) Representative: Vollmann, Heiko, Dipl.-Ing.

(57) **Abstract**

An internal database (1) contains a knowledge process evaluation template (11), a tacit knowledge expression template (12) and a knowledge classification map (13). The knowledge process evaluation template contains a socialization evaluation template for evaluating the socialization process to capture tacit knowledge inside and outside the organization, an externalization evaluation template for evaluating the externalization process to express tacit knowledge in a comprehensible way and convert it into explicit knowledge, a combination evaluation template for evaluating the combination process to link such explicit knowledge to other pieces of explicit knowledge inside and outside the organization, and an internalization evaluation template for evaluating the internalization process to convert explicit knowledge into tacit knowledge through pratice. A member of the organization is evaluated accordingly to each of said four evaluation templates and the obtained results are transmitted into a computer so that said computer analyzes and shows the outcome of how said member handles the actual situation on the computer screen or in a printed document (Fig.2).

## Description

### FIELD OF THE INVENTION

This invention relates to a corporate management system using a computer and two-way data communication (such as LAN, WAN and the Internet.)

### DESCRIPTION OF THE PRIOR ART

Recently, there has been increasing interest in the importance of knowledge management or knowledge-based management. It entails an organization to improve their competitive abilities by efficiently utilizing knowledge assets in said organization. The current methods of utilizing knowledge assets by use of IT (information technology), however, allow the mere sharing of superficial knowledge that could easily expressed in words, such as building a database containing business manuals.

□@True sense of the word "knowledge" includes not only superficial knowledge comprehensible to everyone like in documents but also internal, subjective and contextual knowledge (tacit knowledge) that are difficult to express in words such as how-to tips and experiences accumulated by an organization and its members. It is therefore necessary to share not only document formats and manuals but also tacit knowledge constituting their background information such as how-to tips, experiences, intuitions, and specific cases of failure (that exist inside of an individual which are difficult to be expressed.)

### PROBLEMS TO BE SOLVED BY THE INVENTION

Tacit knowledge cannot be shared in an organization unless an individual is willing to expresses ones' possessed said tacit knowledge in a comprehensible way to others. It is therefore necessary to make the members of the organization realize that they are knowledge workers and have them engaged in a process of expressing their tacit knowledge to convert comprehensible information into explicit knowledge for others. It is, however, very difficult to identify what has to be done for said process and to judge whether said process is successfully completed.

This invention aims to solve this problem, devise a common method to express tacit knowledge possessed by a member of an organization, and provide a system to accumulate and utilize knowledge in the true sense of the word including tacit knowledge at the organizations that may be a company, corporation, association or cooperative.

### MEANS FOR SOLVING THE PROBLEMS

In accordance with this invention, a system for supporting knowledge creation and managing knowledge assets is proposed. The system uses a socialization evaluation template for evaluating the socialization process to capture tacit knowledge inside and outside the organization, an externalization evaluation template for evaluating the externalization process to express tacit knowledge in a comprehensible way and convert it into explicit knowledge, a combination evaluation template for evaluating the combination process to relate such explicit knowledge to other pieces of explicit knowledge inside and outside the organization, and an internalization evaluation template for evaluating the internalization process to convert explicit knowledge into tacit knowledge through practice. With this system, a member of the organization evaluates himself/herself according to each of these four evaluation templates, and the obtained evaluation results are input to a computer. The computer then analyzes and shows the results on the computer screen or in a printed document of how he/she works in the actual situation.

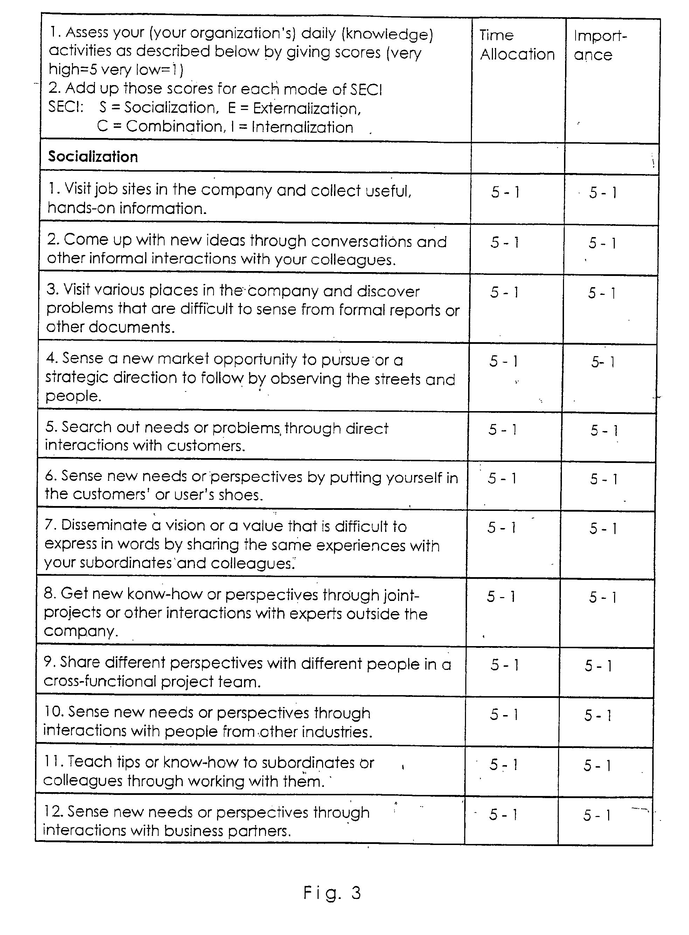

With this system, for example, a member of an organization can evaluate their completed work for specific period of time along shared templates by calling up each template to his/her computer screen daily, weekly, monthly, and constantly. This template indicates every aspect of the socialization, externalization, combination, or internalization process wherein the duration of work an individual spared and the degree of importance the one considered are measured by numeric rating scale as shown in FIG. 3 to FIG. 6. Therefore, an individual task completion(knowledge work) is accurately indicated by inputting those assessment data into a computer by using a mouse and/or keyboard and graphing said results with computer analysis.

As a result, it helps to find an individual□ fs strengths and weaknesses by understanding their working conditions and preferred emphasis placed on a particular task. Furthermore, people at managerial level can accurately understand the actual state of the knowledge work of the entire organization and utilize such understanding in their managerial strategies if each department of the organization analyzes the evaluation results of its members, and the results of such analysis as to each department's knowledge work is available to managerial posts through their computers.

In accordance with the socialization process of this invention entails efforts for sharing and creating tacit knowledge both inside and outside the organization through using body and five senses fully, wherein said process means to gain valuable information which will hardly mentioned honestly in front of managerial people through direct observation by visiting and chatting with colleagues at business front lines in lounges or cafeterias in the organization, to experience a mistake and needs through direct interactions with business partners, and to master useful tips or know-how passed on from senior workers. Also, the externalization process entails efforts for converting tacit knowledge into explicit knowledge that is comprehensible to others such as using dialogue in a metaphor or contemplation and expressing it in the form of a story or a design format. Furthermore, the combination process entails efforts for creating new knowledge by combining a piece of explicit knowledge with another explicit knowledge piece, in addition to this, checking if a piece of explicit knowledge representing one's know-how could be related to another piece of knowledge representing other know-how, discovering new value by compiling different pieces of one's explicit knowledge, and conveying or disseminating a certain piece of explicit knowledge through presentation. The internalization process entails efforts for individual to convert newly obtained explicit knowledge into tacit knowledge through action or practice, and co-opting or mastering explicit knowledge through repeated learning, simulation, or experiment.

It is desirable for every above mentioned evaluation template to be data based so that it will be available through computer access with LAN, WAN, and internet. In other words, a system for supporting knowledge creation and managing knowledge assets can be built if a computer which reads and outputs the four evaluation template; a socialization evaluation template for evaluating the socialization process to capture tacit knowledge inside and outside the organization, an externalization evaluation template for evaluating the externalization process to express tacit knowledge in a comprehensible way and convert it into explicit knowledge, a combination evaluation template for evaluating the combination process to relate such explicit knowledge to other pieces of explicit knowledge inside and outside the organization, and an internalization evaluation template for evaluating the internalization process to convert explicit knowledge into tacit knowledge; from database, and analyzes evaluation results entered in the templates and outputs the analyzed results that represent the actual situation of knowledge work.

Therefore, in this example of carrying out the invention, a group of client computers on an intranet or the Internet can call up and output (display or print out) the evaluation templates by accessing to the server which manages the database containing these templates. In this way, any of these templates can be called up anywhere in the organization whenever necessary. In this case, evaluation results entered in the templates may be analyzed by these client computers or sent to any given server (or mainframe) for analysis, and then sent back to the client computers. In other words, if there is such a server or mainframe, any computer can be a client computer as long as it has the capabilities of outputting such templates and analyzed results. In such a server or mainframe, analyzed results can be accumulated as a database which can be referred to by an executive through another computer when understanding the organization's knowledge work or planning a managerial strategy.

□@For this example, it will be useful if a computer can call up a tacit knowledge expression template that contains reference syntax for expressing tacit knowledge in the externalization process. Tacit knowledge can easily be expressed by filling in the blanks and completing the provided sentences like "(name of an individual) achieved (outcome or result) by (a verb explaining an event by using 'ing' format) with (a thing or person that helped to achieve an object of this outcome)," "This is very __________ for __________," and "There was a __________ % growth in __________". By filling in such blanks in such forms commonly provided to all members of the organization, tacit knowledge can be easily expressed. Such a database may be independent from or included in the database containing the above evaluation templates.

In such case of preparing a tacit knowledge expression template, it is desirable that a glossary of terms applicable for utilizing the template is included in a database so that it can be read/output through computers. That is, if a one skilled in art with expert knowledge pre-selects the most necessary terms for the externalization process, it will be much easier for other members to express tacit knowledge. Such a database may also be independent from or included in the database containing the above evaluation templates.

The system proposed by this example of carrying out the invention may also have a database of accumulated explicit knowledge that has undergone the combination process. In this variation of the system, when such explicit knowledge is called up from the database to a computer, a knowledge classification map showing how different pieces of explicit knowledge are related to each other is presented. In other words, explicit knowledge that has undergone the combination process can be very useful knowledge assets when accumulated in a database. Furthermore, if the knowledge classification map shows how different pieces of explicit knowledge are interrelated based on a certain classification system, just like books in libraries, users of the system will easily search specific pieces of knowledge they need. Therefore, said database for explicit knowledge that has undergone the combination process should be a relational database in which different pieces of explicit knowledge are categorized into groups (such as "Customer Knowledge", "Technical Knowledge" and so on) based on a certain classification system. When users access the database by their computers, the knowledge classification map is shown on their monitors so that they can search for what they want. This database may also be independent from or included in any one of the aforementioned databases.

This invention also proposes, as another example, a system for supporting knowledge creation and managing knowledge assets in which a knowledge consultant manages a database, like one of the database described above, and an organization who is a customer of the consultant has a computer accessible to the database through a two-way communication network so that the templates contained in the database are available to the customer. In this example of carrying out the invention, the management of knowledge assets of an organization is farmed out to an outside knowledge consultant. Since this knowledge consultant is a professional with sufficient equipment who manages the knowledge assets of each customer, this example allows organizations to have a faster, more economical and reliable way of managing knowledge assets than building a system on their own from scratch. This system also enables the customer organizations of a consultant to exchange their databases when necessary and use these databases as indexes of their competitiveness. Furthermore, in this form of carrying out the invention, if the database managed by the knowledge consultant also includes accumulated data of certain intellectual property obtained through the consultant's entering into a contract with each owner of such intellectual property, then the consultant's customer organizations can utilize patents, licenses, designs, trademarks and know-how of others without making contracts with their owners of such intellectual property.

As a different example, this invention also proposes a system for supporting knowledge creation and managing knowledge assets in which a manager manages a database, one or more organizations acting together as a knowledge consultant having a server accessible to the database through a two-way communication network, and the consultant's customers have computers working as the server's clients, and customer organizations can utilize the templates contained in the manager's database by having their computers access the server through a two-way communication network. In this example of carrying out the invention, a group of organizations under contract with the manager act as a knowledge consultant and assist customer organizations in managing their knowledge assets. Since the manager is responsible for the main equipment for managing knowledge assets, the group of organizations acting as the knowledge consultant can easily start consulting business without equipment. As in the previous example, if the database handled by the manager also includes accumulated data of certain intellectual property obtained through the manager contracting with each owner of such intellectual property and such data of intellectual property is available to the knowledge consultant, then the consultant's customer organizations can utilize such property of others through the knowledge consultant.

### EFFECT OF THE INVENTION

In accordance with this invention, the knowledge process for externalizing tacit knowledge as shared property can be evaluated by a common method, the evaluation templates. Any member of an organization can put the process into practice as part of his/her daily work by following the method. In other words, this invention allows to externalize tacit knowledge which include invisible, subjective or internal knowledge such as know-how, intuitions, tips and experiences through the common templates, and accumulate and manage it as a database, in addition to currently shared superficial information such as document formats and manuals. This advantage allows the organization to utilize its "knowledge" assets effectively in the true sense of the word and substantially improve its competitiveness. Furthermore, knowledge sharing in accordance with this invention-allows the organization to create and accumulate new knowledge, and thus contributing to its growth.

The invention will now be described in more detail by way of example with reference to the accompanyings, in which:
FIG. 1 shows a schematic diagram of a network illustrating an example of the invention related to CLAIM 1 and CLAIM 2.
FIG. 2 shows the details of the knowledge asset database.
FIG. 3 shows a specific example of the socialization evaluation template.
FIG. 4 shows a specific example of the externalization evaluation template.
FIG. 5 shows a specific example of the combination evaluation template.
FIG. 6 shows a specific example of the internalization evaluation template.
FIG. 7 shows a schematic diagram of a network illustrating an example of the invention related to CLAIM 6.
FIG. 8 shows a schematic diagram of a network illustrating an example of the invention related to CLAIM 8.

### DESCRIPTION OF THE PREFERRED EMBODIMENT

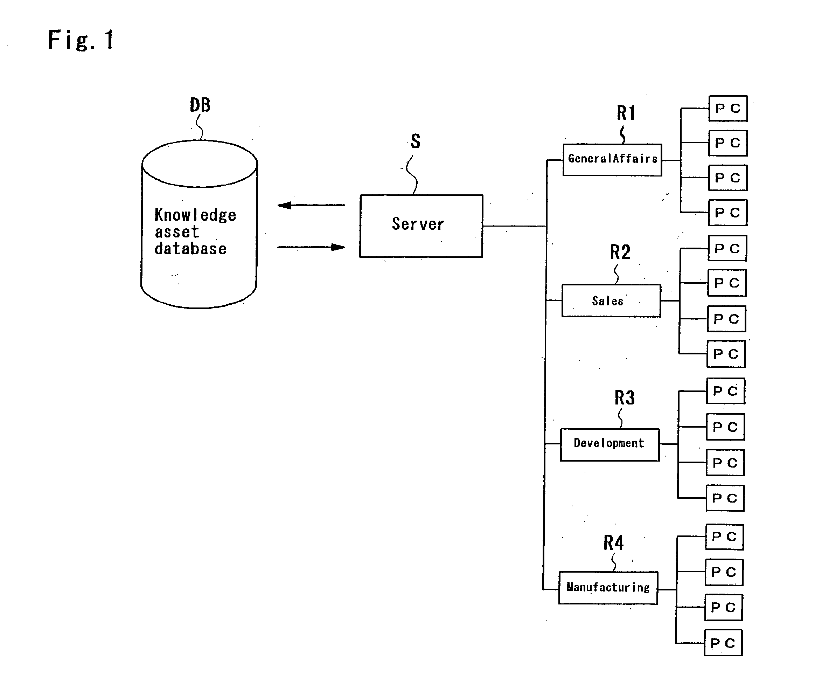

Figure 1 shows an example of carrying out this invention related to CLAIM 1 and CLAIM 2. In this case, a local area network (LAN) is set up in an organization. A server managing this network (S) is connected to a group of routers (R1 - R4), each of which is assigned to a functional department of the organization such as General Affairs, Sales, Development and Manufacturing. Through such a router, a number of computers (PC) are connected to the server as clients. This server (S) manages a knowledge asset database (DB), which can take the form of any existing database such as a relational database and a hierarchical database, through an intranet or the Internet, classifies data about evaluation results coming from the client computers (PC) of each department, and accumulates such data in the database (DB). Data about each department is further classified into subcategories such as Personnel, Accounting and so on are some example for General Affairs.

With this system for supporting knowledge creation and managing knowledge assets, a member of an organization operates a computer (PC), access the database (DB) through the server (S), and has an evaluation template (FIG.3 - FIG.6) contained in the database appear on the screen. The member then inputs his/her evaluation results to the computer by checking (clicking) designated places in the template. The computer then analyzes the results, figures out the state of his/her knowledge works, and shows it on the screen while the same data is sent to the server (S) that will be accumulated in the database (DB).

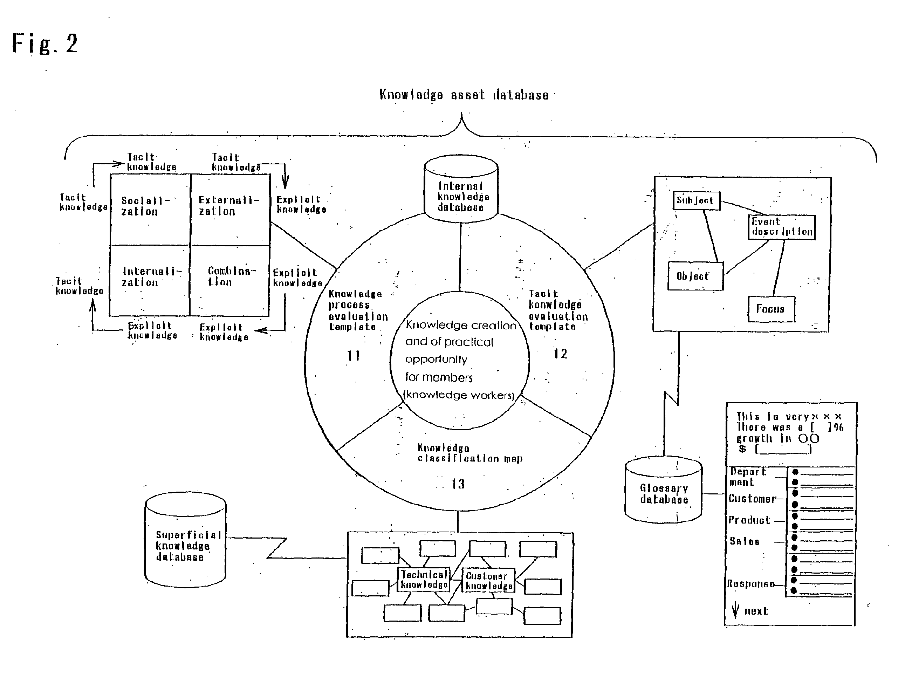

With this system, data and explicit knowledge accumulated in the knowledge asset database (DB) can be searched and retrieved by use of a computer (PC). The details of the knowledge asset database (DB) are described in Figure 2.

The knowledge asset database in this example (DB) contains an internal knowledge database (1), a superficial knowledge database (2) and a glossary database (3). The superficial knowledge database (2) is a database of a conventional style in which visible knowledge such as operation manuals and documents are contained and related to each other. It is used with the internal knowledge database (1) when necessary. The glossary database (3) is a database of terms to be used in a tacit knowledge expression template described later.

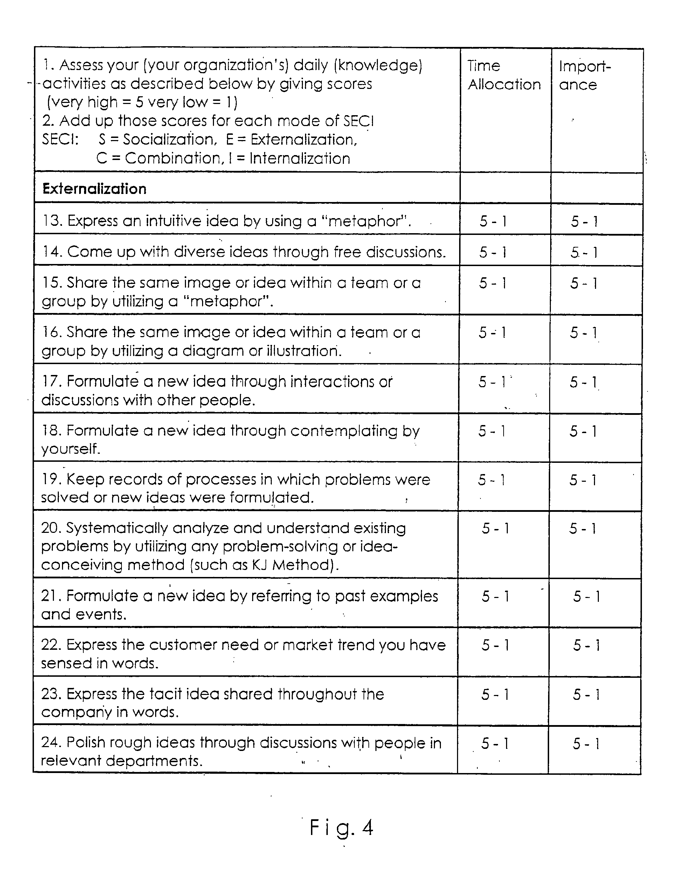

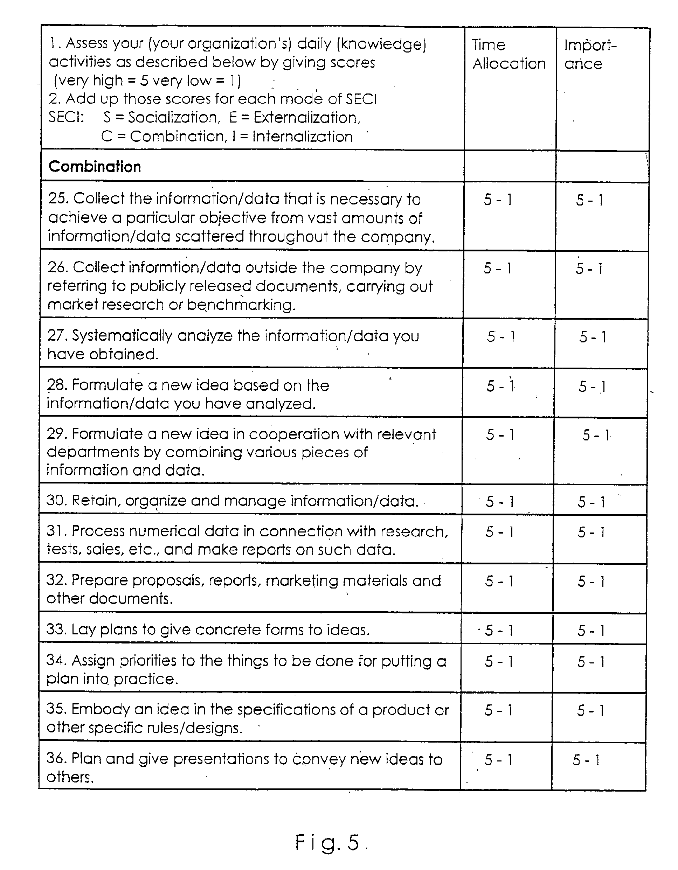

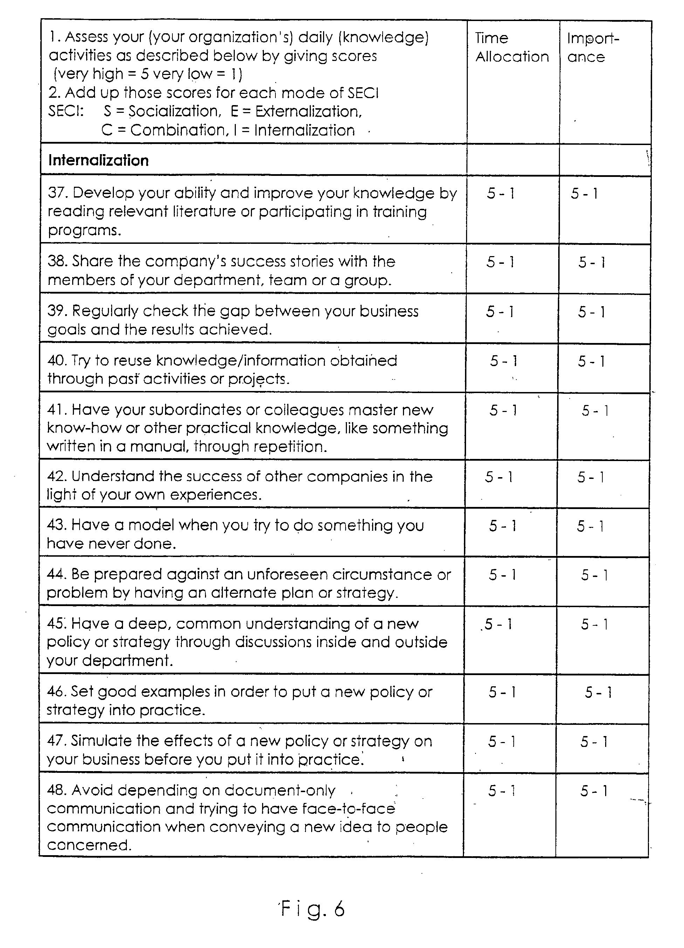

The internal knowledge database (1) contains a knowledge process evaluation template (11), a tacit knowledge evaluation template (12) and a knowledge classification map (13). The knowledge process evaluation template (11) consists of a socialization evaluation template (Figure 3), an externalization evaluation template (Figure 4), a combination evaluation template (Figure 5) and an internalization evaluation template (Figure 6). In other words, the knowledge processes described here means a process consisting of socialization, externalization, combination and internalization.

Socialization mentioned here means converting tacit-knowledge-to-tacit-knowledge for capturing someone's tacit knowledge and mastering it as one's own knowledge through experience. Tasks for the socialization process include sharing tacit knowledge of business at front lines or customers through direct experiences such as visiting various places inside and outside the organization, and mastering know-how passed on from senior colleagues. The socialization evaluation template described in Figure 3 is comprised of a number of questions (1 - 12) about specific tasks for the socialization process and choices of answers (of the duration of work and the degree of importance placed on each task). If one of these choices is mouse-clicked or typed on keyboard, a point corresponding to the answer is added. Therefore, a member of an organization can evaluate his/her socialization work by calling up the socialization evaluation template to his/her computer (PC) after the day's work and checking the applicable answers.

Externalization stated here means a conversion of tacit-knowledge-to-explicit-knowledge for translating one's tacit knowledge into explicit knowledge. Tasks for the externalization process include refining tacit knowledge through dialogue or contemplation and expressing it in the form of a story, diagram or design what is comprehensible to others. The externalization evaluation template described in Figure 4 is comprised of a number of questions about specific tasks for the externalization process and choices of answers, just like the socialization evaluation template in Figure 3.

Therefore, a member of an organization can evaluate his/her externalization work by calling up the externalization evaluation template to his/her computer (PC) and finding the applicable answers.

Combination meant here is explicit-knowledge-to-explicit-knowledge conversion for creating new explicit knowledge by combining different pieces of explicit knowledge. Tasks for the combination process entails relating externalized explicit knowledge to other explicit knowledge by searching the internal knowledge database (1) or the superficial knowledge database (2), or through presentation. The externalization evaluation template described in Figure 5 is comprised of a number of questions about specific tasks for the externalization process and choices of answers, just like the socialization evaluation template in Figure 3. Therefore, a member of an organization can evaluate his/her combination work by calling up the combination evaluation template to his/her computer (PC) and checking the answers.

Internalization here means explicit-knowledge-to-tacit-knowledge conversion for turning newly obtained explicit knowledge into one's tacit knowledge. Tasks for the internalization process entails co-opting and mastering explicit knowledge through repetition, learning simulation. The internalization evaluation template described in Figure 6 is comprised of a number of questions about specific tasks for the internalization process and choices of answers, just like the socialization evaluation template in Figure 3. Therefore, a member of an organization can evaluate his/her internalization work by calling up the internalization evaluation template to his/her computer (PC) and checking the applicable answers.

The internal knowledge database (1) contains the tacit knowledge expression template (12) for the externalization process. This template is designed to allow users to externalize and express tacit knowledge in a common format. As shown in Figure 2, the tacit knowledge expression template in this example is comprised of charts, each of which has sections (blanks) corresponding to "subject", "object", "event description" and "focus". These sections (blanks) are to be filled out by each user of the system. In order to refer the terms to fill prepared blanks in the template, this system is equipped with the glossary database (3). More specifically, each member of the organization can convert tacit knowledge into explicit knowledge by selecting the tacit knowledge expression template (12) of an appropriate type, opening it on his/her computer (PC), selecting applicable terms from the glossary database, and fill out the blanks in the template with such terms. In this way, tacit knowledge can be converted into explicit knowledge in the format common to the entire organization. This allows the organization to easily manage and retrieve its knowledge assets. After their blanks are filled out, such tacit knowledge expression templates are stored in the internal knowledge database (11) and can be used for the combination process.

The knowledge classification map (13) can be used for the combination process. As illustrated in Figure 2, the knowledge classification map (13), for example, is roughly classified into two folders, a technical knowledge root folder for technology-related explicit knowledge and a customer knowledge root folder for sales-related explicit knowledge. Knowledge in each of these root folders is further classified into a number of sub-folders. All these folders are linked each other, and such links include those between the two root folders, each root folders and its sub-folders, and the sub-folders under the two root folders. Users of the system can relate (link) certain explicit knowledge to other explicit knowledge by just dropping such knowledge in an applicable folder in the knowledge classification map.

Explicit knowledge that is linked to other knowledge and stored in the above mentioned folders can be searched by opening the knowledge classification map (13) and tracking linked folders. Since each of these folders is also linked to the superficial knowledge database (2), users of the system can also retrieve superficial knowledge by tracking the knowledge classification map.

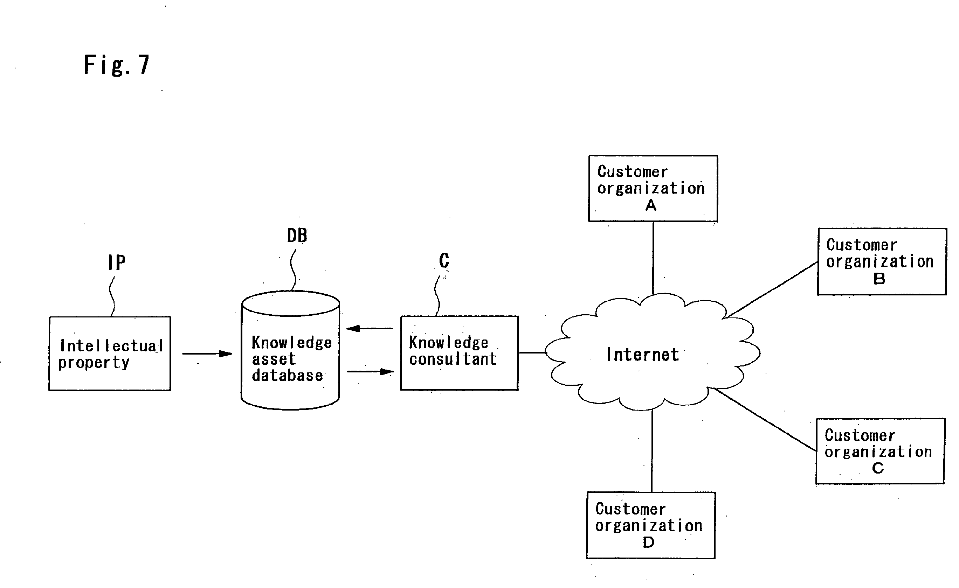

Figure 1 shows an example of this invention in which a system for supporting knowledge creation and managing knowledge assets is built and managed by an organization. This, however, may not be affordable for some organizations due to an initial investment to build a system and its running costs. Figure 7 shows another example of this invention related to CLAIM 6 that can be implemented at lower cost. This example entails a system in which an organization farms out the management of its knowledge asset database to an outside knowledge consultant.

In this system, a group of customer organizations (A), (B), (C) and (D) can access a server of a knowledge consultant (C) through a two way communication network (the Internet in this case) by making consulting agreement with the consultant respectively. A local area network (LAN) is set up in each of the customer organizations (A), (B), (C) and (D). Each client computer on the LAN can access the consultant's server on the Internet through a proxy server (or other relaying devices.) As in the previous example, the customer organizations (A), (B), (C) and (D) can use the templates and knowledge classification map from their client computers.

The knowledge consultant (C) manages a knowledge asset database (DB), classifies data coming from each of the customer organizations (A), (B), (C) and (D), and accumulates such classified data in the database. The knowledge asset database managed by the knowledge consultant also contains a database of certain intellectual property what the consultant has obtained by making a contract with each owner of such property. The customer organizations (A), (B), (C) and (D) can use such intellectual property by paying a prescribed licensing fee. In this way, the consultant also serves as a bridge linking intellectual property of third parties and the customer organizations.

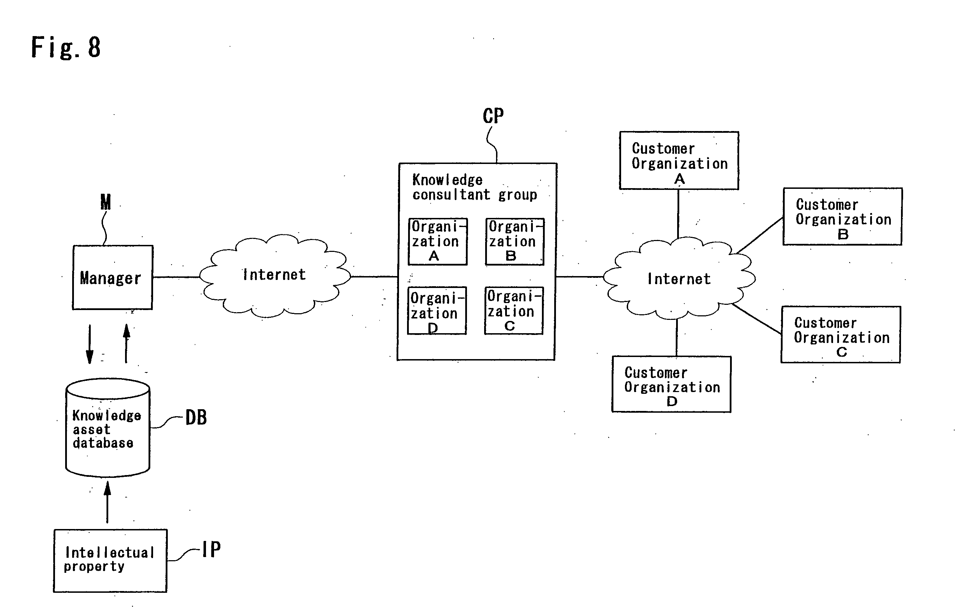

Figure 8 shows a different example of this invention, as an extension of this consultant-style system, related to CLAIM 8. In this example, a group of organizations (A), (B), (C) and (D) forms a consulting group (CP) which acts as a knowledge consultant. The knowledge consultant group (CP), by establishing a contract with a manager who manages a knowledge asset database (DB), can access and use the database through the Internet. Each of the organizations (A), (B), (C) and (D) comprising the knowledge consulting group enters into a consulting agreement with its customers (A), (B), (C) and (D) respectively. In this way, a system for supporting knowledge creation and managing knowledge assets can be built for each customer organization by a method common to the knowledge consultant group (CP).

As in the previous example, the knowledge asset database managed by the manager (M) also contains a database of certain intellectual property what the manager has obtained from a contract exchanged with each owner of such intellectual property (IP), and has made it available to the knowledge consulting group (CP). The organizations (A), (B), (C) and (D) comprising the knowledge consulting group can use such intellectual property of third parties by paying a prescribed licensing fee.

Each of the customer organizations (A), (B), (C) and (D) can access the knowledge asset database (DB) of the manager (M) through the Internet from its client computers on its LAN, therefore it permits to utilize and retrieve the templates and search knowledge assets contained therein.

### REFERENCE LETTERS AND REFERENCE NUMERALS

- (C), (CP): Knowledge consultant
- (M): Manager
- (DB): Knowledge asset database
- (1): Internal knowledge database
- (2): Superficial knowledge database
- (3): Glossary database
- (11): Knowledge process evaluation template (socialization, externalization, combination and internalization)
- (12): Tacit knowledge expression template
- (13): Knowledge classification map

## Claims

1. A system for supporting knowledge creation and managing knowledge assets by using four evaluation templates wherein a member of an organization is evaluated accordingly to each of said four evaluation templates, inputting obtained results from said evaluation templates into a computer, and analyzing results to show how said member acts in the actual situation. Said four evaluation templates comprising a socialization evaluation template for evaluating the socialization process to capture tacit knowledge inside and outside the organization, an externalization evaluation template for evaluating the externalization process to express tacit knowledge in a comprehensible way and convert it into explicit knowledge, a combination evaluation template for evaluating the combination process to relate such explicit knowledge to other pieces of explicit knowledge inside and outside the organization, and an internalization evaluation template for evaluating the internalization process to convert explicit knowledge into tacit knowledge through practice.

2. A system for supporting knowledge creation and managing knowledge assets comprising a database which including a socialization evaluation template for evaluating the socialization process to capture tacit knowledge inside and outside the organization, an externalization evaluation template for evaluating the externalization process to express tacit knowledge in a comprehensible way and convert it into explicit knowledge, a combination evaluation template for evaluating the combination process to relate such explicit knowledge to other pieces of explicit knowledge inside and outside the organization, and an internalization evaluation template for evaluating the internalization process to convert explicit knowledge into tacit knowledge. It also includes a computer for reading and outputting said four evaluation templates from said database, analyzing evaluation results about a member of an organization that are entered in said template, and outputting the results of said analysis that represent the actual situation of how said member works.

3. The system for supporting knowledge creation and managing knowledge assets as specified in CLAIM 2 that has a tacit knowledge expression template, said tacit knowledge expressing template being read and output by a computer as a reference syntax for expressing tacit knowledge in the externalization process.

4. The system for supporting knowledge creation and managing knowledge assets as specified in CLAIM 3 that has a glossary for a tacit knowledge expression template in its database, said glossary being read and output by a computer, terms included in said glossary being applicable to said tacit knowledge expression template.

5. The system for supporting knowledge creation and managing knowledge assets as specified in any one of CLAIM 2, CLAIM 3, and CLAIM 4 wherein said system automatically presents knowledge classification map which indicated inter-relatedness of each said knowledge, when said explicit knowledge is requested by a computer from said database in which contains knowledge accumulated after the combination process.

6. The system for supporting knowledge creation and managing knowledge assets as specified in any one of CLAIM 2, CLAIM 3, CLAIM 4 and CLAIM 5 wherein a knowledge consultant manages a database and a customer organization has a computer which enables to use every template by accessing said database through two-way communication network.

7. The system for supporting knowledge creation and managing knowledge assets as specified in CLAIM 6 wherein a database managed by a knowledge consultant also contains accumulated intellectual resource data gained by making a contract between said knowledge consultant and owner of intellectual property.

8. The system for supporting knowledge creation and managing knowledge assets as specified in any one of CLAIM 2, CLAIM 3, CLAIM 4 and CLAIM 5 wherein a manager manages a database, one or more organizations acting as a knowledge consultant has a server accessible to said database through a two-way communication network, and a customer organization has a computer that works as a client of said server of said knowledge consultant by accessing thereto through a two-way communication network, and said database contains different templates available for said customer through said access to said server.

9. The system for supporting knowledge creation and managing knowledge assets as specified in CLAIM 8 wherein a database managed by a manager includes accumulated intellectual property data obtained through making contract between said manager and the owner of said intellectual property.
